# EUROPEAN PATENT SPECIFICATION

(11) **EP 3 231 135 B1**
(45) Date of publication and mention of the grant of the patent: **21.08.2019**
(21) Application number: 14907627.5
(22) Date of filing: 12.12.2014
(51) Int. Cl.: H04L 12/24

(54) **ALARM CORRELATION IN NETWORK FUNCTION VIRTUALIZATION ENVIRONMENT**
ALARMKORRELATION IN NETZWERKFUNKTIONVIRTUALISIERUNGSUMGEBUNG
CORRÉLATION D'ALARME DANS UN ENVIRONNEMENT DE VIRTUALISATION DE FONCTION DE RÉSEAU

(43) Date of publication of application: 18.10.2017
(73) Proprietor: Nokia Solutions and Networks Oy, 02610 Espoo (FI)
(72) Inventor: ANDRIANOV, Anatoly, Schaumburg, IL 60173 (US); YAO, Yi Zhi, Beijing 100102 (CN)
(74) Representative: Nokia EPO representatives
(86) International application number: PCT/US2014/070056
(87) International publication number: WO 2016/093861

(56) References cited:
- EP-A1- 3 211 827
- CN-A- 104 170 323
- US-A- 5 309 448
- US-A1- 2001 013 107
- US-A1- 2001 013 107
- US-A1- 2013 177 310
- US-B1- 6 253 339
- US-B1- 6 351 213
- US-B1- 6 604 208
- US-B1- 6 707 795
- US-B1- 7 962 589
- US-B2- 6 356 885
- "Network Functions Virtualisation (NFV); Management and Orchestration", GROUP SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. NFV MAN, no. V1.1.1, 1 December 2014 (2014-12-01), XP014235740,

## Description

### BACKGROUND:

### Field:

Correlation of information related to network operations may be useful in many communication systems. For example, certain wireless communication networks may benefit from alarm correlation in network function virtualization environments.

### Description of the Related Art:

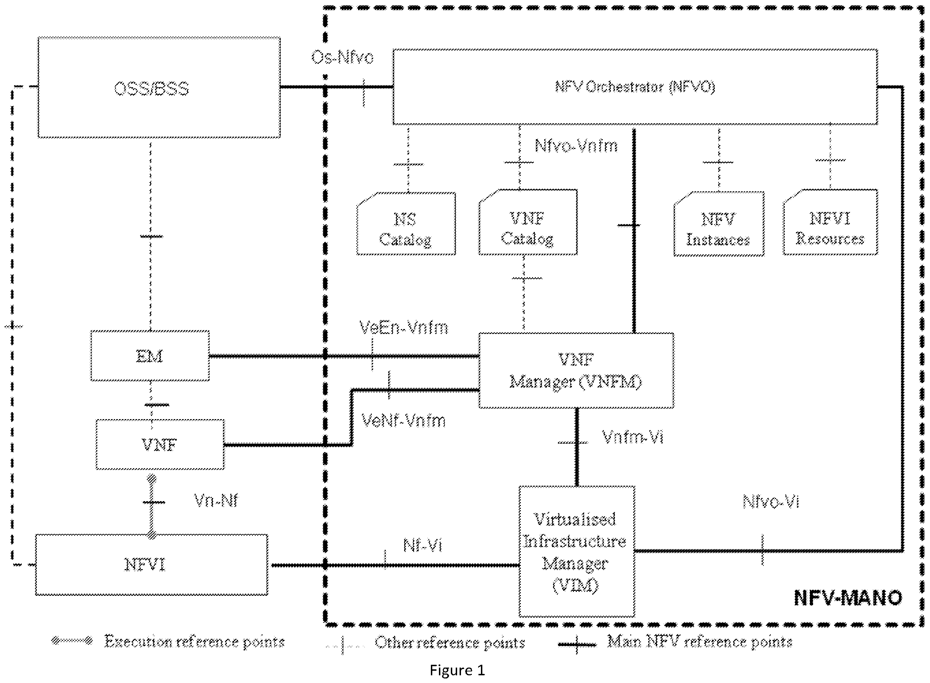

Figure 1 illustrates a network function virtualization environment (NFV) architectural framework. Specifically, the figure shows a NFV management and orchestration (MANO) architectural framework with reference points, as copied from section 5.3 of ETSI GS NFV-MAN 001, draft version 0.6.3 2014-09.

As shown in Figure 1, the architecture can include a network functions virtualization orchestrator (NFVO), an element management (EM) function, a virtualized network function (VNF), a VNF manager (VNFM), a virtualized infrastructure manager (VIM), and network functions virtualization infrastructure (NFVI).

With NFV, the EM and network management (NM) may need to perform fault management for the applications such as network functions and the VNFM and VIM may need to perform fault management for the virtual machines (VMs). The VIM could perform fault management for virtualized infrastructure as to hardware; and EM traditionally has been responsible for the fault management of the hardware or physical network function (PNF) in NFV terms.

In an NFV environment, the VIM can forward the alarms about virtualized infrastructure and VM to the VNFM. The VNFM can forward the alarms about virtualized infrastructure and VM to the EM. The application layer alarm can be directly reported to the EM by the application or by the management module/unit of the application. The EM could forward the alarms with root cause or forward all of the received alarms to NM. However, a fault from underlayer may cause alarms in both the underlayer and the higher layers. For instance, a hardware fault could cause alarms in hardware layer, VM layer and application layer, and this hardware fault cannot be resolved by restoring the VM or the application without clearing the alarm or resolving an issue at the virtualized infrastructure layer. Similarly, a VM fault may cause alarms at both VM layer and application layer, restoration of the application on the same VM cannot resolve the issue for similar reasons in such a case.

The terms "underlayer," "lower layer," or "layer N-1" are terms that can be used interchangeably to describe a layer below the current layer. It should be noted that in some cases the underlayer could be more than one rank below the current layer, and thus may be considered "layer N-2" or "layer N-3," depending on the architecture employed. Other modifications are also possible.

Since the alarm (A) may be caused by a fault from an underlayer, the corresponding fault management entity may need to correlate the alarm (A) with the alarms generated at underlayer, if any, to locate the fault and resolve the issues.

So, for the application layer alarm, the EM/NM may need to know whether the alarm is caused by the fault from VM or virtualized infrastructure where the application is installed; for the VM layer alarm, the VNFM may need to know whether the fault is from hardware on which the VM is residing.

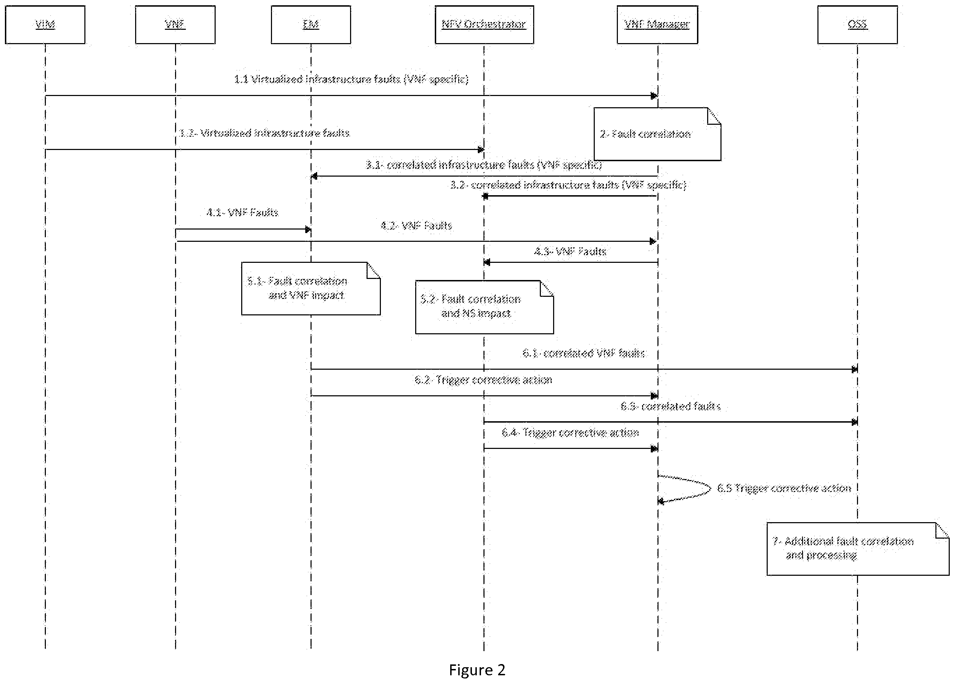

There is a fault management flow described in ETSI MANO GS. Figure 2 illustrates a fault management flow. More particularly, Figure 2 illustrates NFV MANO fault management flow, as copied from section B.6 of ETSI GS NFV-MAN 001, draft version 0.6.3 2014-09. However this flow is too generic and showing the correlation may be needed in various entities, but this flow lacks a detailed solution to enable the alarm correlation in these entities.

ETSI NFV MANO GS provides high level information on a possible fault management flow. This flow is better characterized as a requirement for alarm correction rather than a correlation.

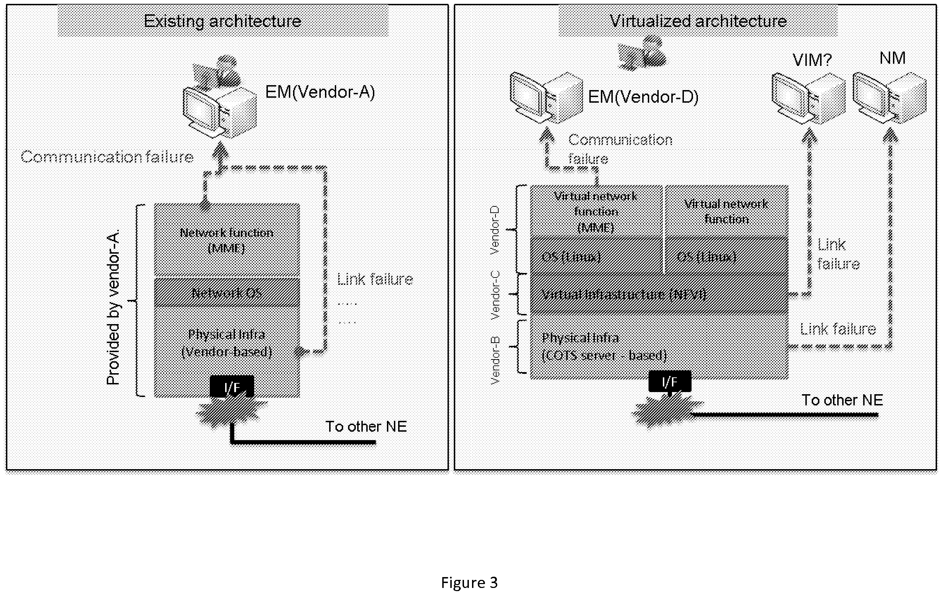

Figure 3 illustrates potential problems with alarm correlation. Figure 3 is copied from section 3.2.3 of 3GPP SA5 T-Doc S5-144330 "Event correlation points for Virtualized 3GPP network management," the entirety of which is hereby incorporated herein by reference. As shown in Figure 3, a communication failure may be due to a link failure, which may be easier to identify in an older architecture (labelled "existing") than in a virtualized architecture. In the virtualized architecture, the link failure may provide alarms to the EM, VIM, and NM.

### SUMMARY:

The invention is defined in the independent claims 1, 2, 3, 5, 6, 7, 8, 10. Embodiments of the invention can be found in the dependent claims.

### BRIEF DESCRIPTION OF THE DRAWINGS:

For proper understanding of the invention, reference should be made to the accompanying drawings, wherein:
Figure 1 illustrates a network function virtualization environment (NFV) architectural framework.
Figure 2 illustrates a fault management flow.
Figure 3 illustrates potential problems with alarm correlation.
Figure 4 illustrates virtualized infrastructure alarm reporting, according to a first alternative, in certain embodiments.
Figure 5 illustrates VNFC layer alarm reporting, according to a first alternative, in certain embodiments.
Figure 6 illustrates application layer alarm reporting, according to a first alternative, in certain embodiments.
Figure 7 illustrates application layer alarm reporting according to a second alternative, in certain embodiments.
Figure 8 illustrates Table 1: Attributes of InventoryUnitVM IOC, according to certain embodiments.
Figure 9 illustrates Table 2: Added attributes into the definition of VMUnits, according to certain embodiments.
Figure 10 illustrates Table 3: Definition of VMList, according to certain embodiments.
Figure 11 illustrates methods according to certain embodiments.
Figure 12A illustrates other methods according to certain embodiments.
Figure 12B illustrates further methods according to certain embodiments.
Figure 13 illustrates a system according to certain embodiments.

### DETAILED DESCRIPTION:

Certain embodiments provide a method and system for alarm correlation in an NFV environment. More particularly, certain embodiments provide detailed solutions on alarm correlation to support the fault management entities to find the root cause of the alarm. There may be at least three alternatives with a variety of variations of methods and systems for providing such correlation.

According to certain embodiments in a first alternative, related lower and/or higher layer information can be carried forward in alarm reporting:

In this alternative, hardware (H/W) layer, VM layer, VNFC layer, and application layer alarms can each take into account information that may be needed for correlation performed elsewhere, such as at a higher layer.

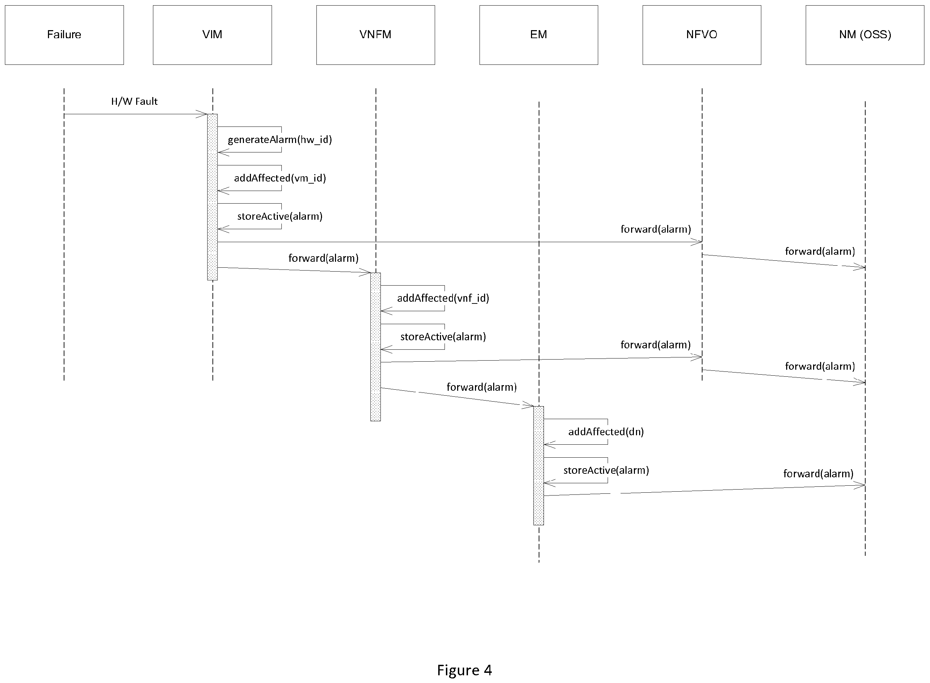

Figure 4 illustrates virtualized infrastructure alarm reporting, according to a first alternative, in certain embodiments. As shown in Figure 4, for the H/W or virtualized infrastructure layer alarms, the original alarm may contain an H/W identifier. The VIM can add information about affected VM(s) and can forward this alarm to VNFM. The VNFM can add the information about affected VNF(s) and can forward this alarm to the EM. The EM can add the information about affected Managed Functions, for example, with their distinguished name (DN), and can forward this alarm to the NM.

Similarly, for the VM layer alarms, the original alarm can contain the VM identifier. The VIM can perform internal correlation of VM layer alarm(s) against any active virtualized infrastructure alarms. In case of a positive match meaning that an active virtualized infrastructure alarm is causing problem at VM layer and in case an alarm suppression mode selected, the VIM may suppress the VM layer alarm. In case of a positive match and alarm suppression mode de-selected, the VIM may add information about underlying H/W alarm(s) and virtualized infrastructure, and VM layer alarms may be grouped together. The VIM may then forward the alarm, with hardware information, to the VNFM. The VNFM may add information about affected VNF(s) and may forward this alarm to the EM. The EM can add information about affected managed functions (for example with their DN) and can forward this alarm to the NM.

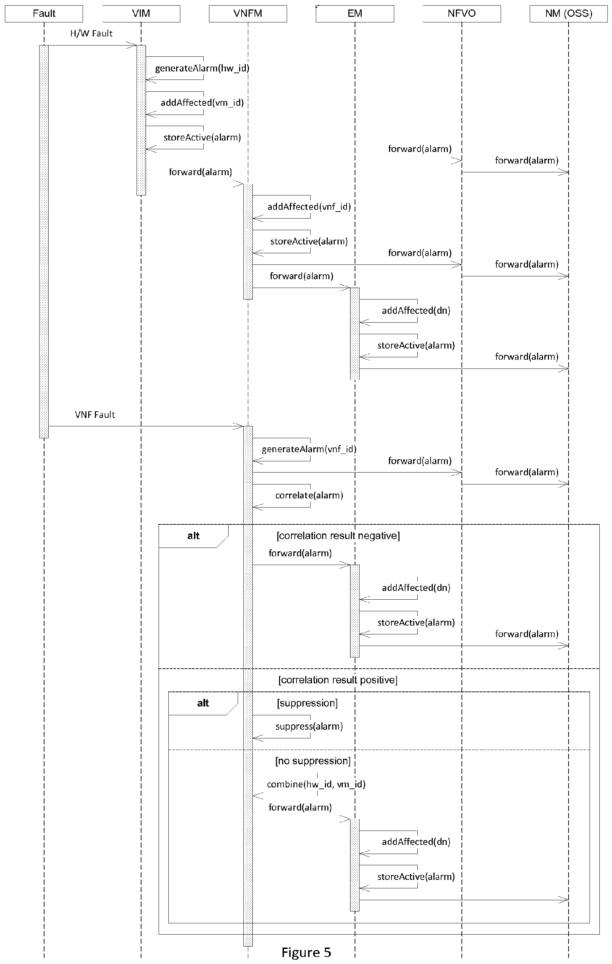

Figure 5 illustrates VNFC layer alarm reporting, according to a first alternative, in certain embodiments. As shown in Figure 5, for the VNFC layer alarms, the original alarm can contain the VNFC, or virtualization deployment unit (VDU), identifier. The VNFM can perform internal correlation of VNFC layer alarm(s) against any active virtualized infrastructure and/or VM layer alarms the VNFM has received from VIM. In case of a positive match, meaning active virtualized infrastructure or VM layer alarm causing problem at application layer, and in case alarm suppression mode is selected, VNFM may suppress the VNFC layer alarm. In case of a positive match and alarm suppression mode de-selected, VNFM can add information about underlying H/W and VM alarm(s), with virtualized infrastructure, VM layer and VNFC layer alarms being grouped together. The VNFM can forward this alarm to the EM. The EM can add the information about affected managed functions, for example with the DN(s) of the affected managed function(s), and can forward this alarm to the NM.

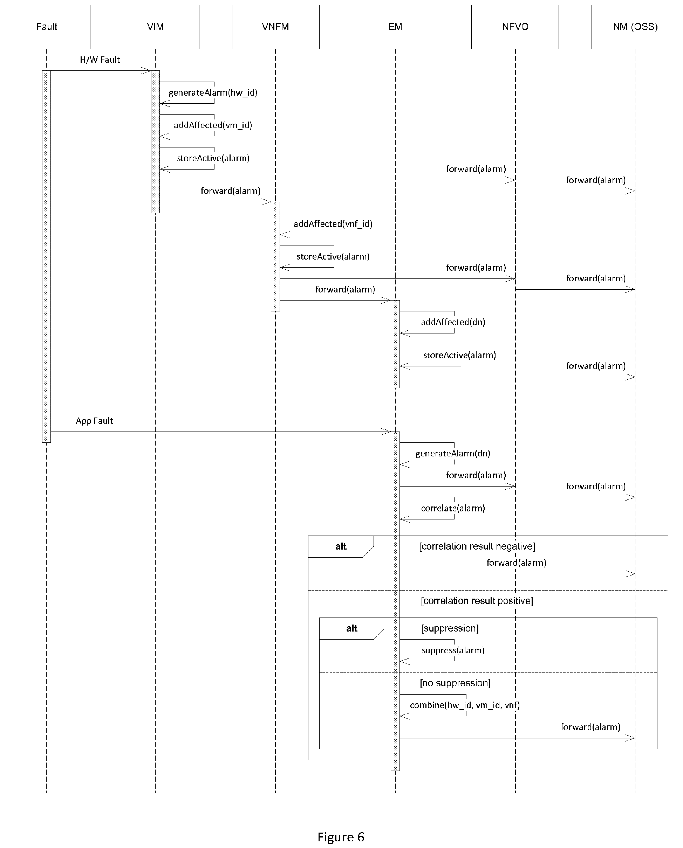

Figure 6 illustrates application layer alarm reporting, according to a first alternative, in certain embodiments. As shown in Figure 6, for application layer alarms, the original alarm can contain the managed function, for example DN, identifier. The EM can perform internal correlation of application layer alarm(s) against any active VNFC, virtualized infrastructure and/or VM layer alarms the EM has received from VNFM. In case of a positive match, meaning active VNFC, virtualized infrastructure or VM layer alarm causing problem at application layer, and in case of alarm suppression mode selected, the EM may suppress the application layer alarm. In case of a positive match and alarm suppression mode de-selected, the EM can add information about underlying VNFC, H/W and VM alarm(s), moreover VNFC layer, virtualized infrastructure, VM layer and application layer alarms can be grouped together. The EM can forward this alarm to the NM.

In this example embodiment, the "alarm suppression" can imply that only a root cause alarm is forwarded north-bound to higher layers, therefore minimizing the overall amount of alarm information reaching the operator. The other mode, where higher layer alarms are not suppressed, but rather combined with the lower layer alarms, may not reduce the overall amount of alarm data, but may provide a more complete picture in cases where an end-to-end (E2E) network model is not available. For example, mapping of apps to VNFC, VNFC to VM, and VM to H/W may not always be known.

Storage of active lower layer alarms at the forwarding entity may help internal alarm correlation. For example, the VIM may store both active virtualized infrastructure and VM alarms. The VNFM may store active alarms the VNFM received from the VIM (including, for example, both virtualized infrastructure and VM alarms) and alarms reported directly to VNFM. Furthermore, the EM may store all active alarms the EM received from VNFM.

According to certain embodiments in a second alternative, the related lower layer information can be queried in the alarm reporting. This approach may be similar to the first alternative approach described above. One difference may be that the forwarded information about lower layer active alarms may not be stored at the forwarding entity. Instead, whenever an alarm is reported at a particular layer, the management entity for the affected layer can query a lower layer's management entity about related/impacting active alarms. Thus, the active alarms may be stored only at the layer where they "belong" or were originated.

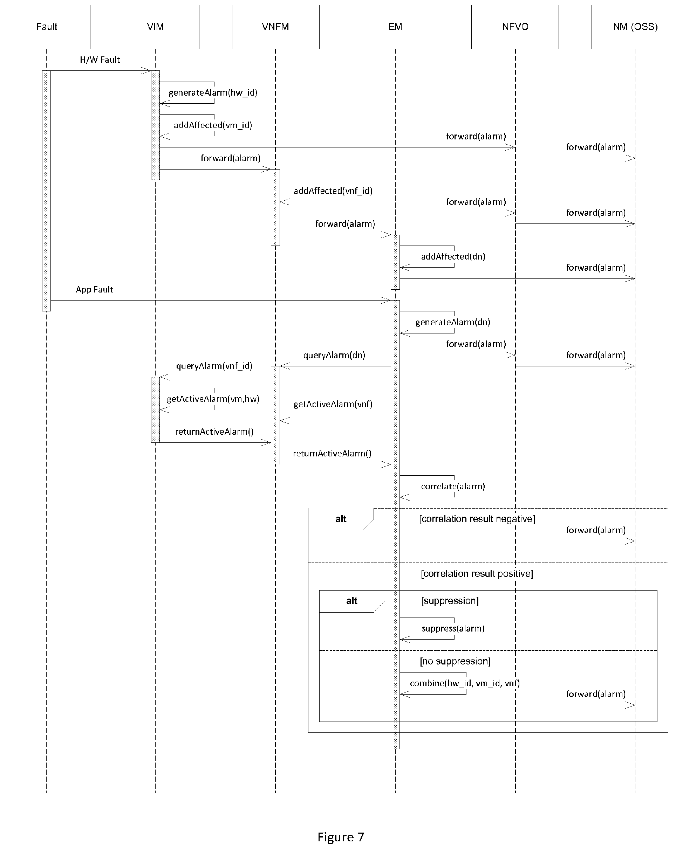

Figure 7 illustrates application layer alarm reporting according to a second alternative, in certain embodiments. As shown in Figure 7, for application layer alarms, the original alarm can contain the managed function (for example DN) identifier. The EM can query the VNFM about any active alarms impacting the managed function. The VNFM can receive the query from the EM and can check for any active alarms at VNF/VNFC layer. In addition the VNFM may also query the VIM for any alarms impacting the VNF/VNFC in question. The VNFM can report the active alarms to EM. The EM can receive the lower layer alarms from the VNFM and can correlate them with the active application layer alarm.

The EM can then make a decision whether to forward an active application layer alarm to the NM based on the results of correlation step and suppression mode. In case of negative correlation result, the application layer alarm can be tagged with an application layer root cause and forwarded to the NM. In case of a positive correlation result and active suppression mode, the active application layer alarm may not be forwarded to the NM. In case of positive correlation result and inactive suppression mode, the active application alarm can be tagged with lower layer root cause (alarm information can be combined) and can be forwarded to the NM.

The procedure may be viewed as recursive query of one layer below for each new active alarm. However, with proper alarm classification (for example, an active alarm at N-1 layer impacting layer N may result in an active alarm at layer N), the recursion (query of more than level deep) may not be needed.

Certain embodiments according to a third alternative can include carrying the related lower layer information in the data model. Thus, for example, the application layer object class XYZFunction (no matter the upper or lower case, for example, MMEFunction) can indicate (by the VNF or its OAM Unit/Client) the underlayer VM (where the application XYZ is installed) by any kind of identifier that could identify the VM, for example an instance DN.

Furthermore, in certain embodiment the VM layer object class such as VMUnit/InventoryUnit (no matter what is the name of the object class) can indicate (by the VIM) the underlayer hardware (where the VM is generated on) by any kind of identifier that could identify the hardware, for example, the instance DN.

When the alarm of a certain layer is received, the fault management entity can check whether the fault management entity has also received an alarm of underlayer resource (as indicated by the instance of the data model) in a certain time window, to determine a location of the root cause of the alarm. For instance, for the alarm of a XYZFunction instance, if the alarms of the underlayer VM (indicated by the instance of the XYZ model) are also received and no alarm of the underlayer hardware (indicated by the instance of the VM object class) is received, the root cause may be determined to be at the VM.

For this alternative, another option may be to carry the related upper layer information in the data model, the principles can be similar to those described above.

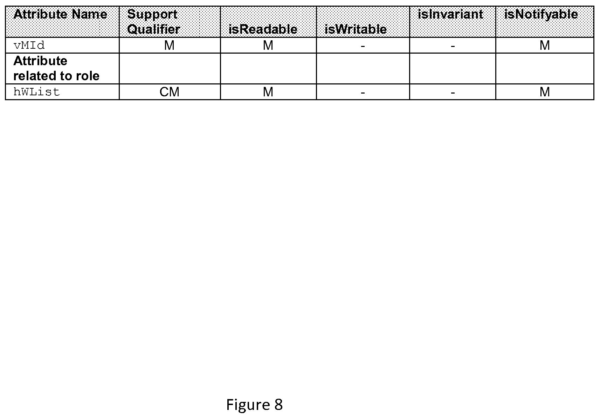

These embodiments can be variously implemented. For example, according to the third alternative, the VM can be modeled into InventoryUnitVM information object class (IOC) or another name (see, for example, 3GPP TS 28.632, and include the hwList attribute in this IOC. Figure 8 illustrates Table 1: Attributes of InventoryUnitVM IOC, according to certain embodiments.

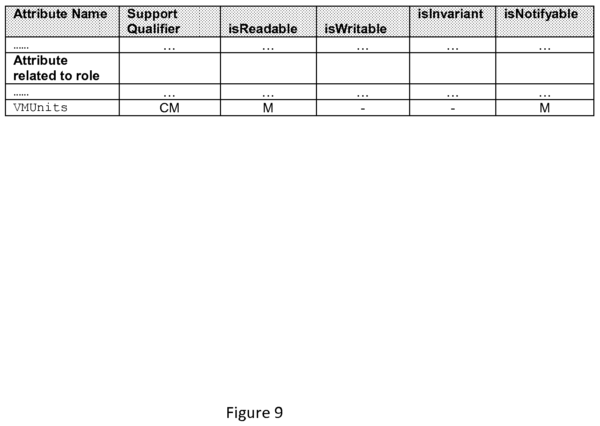

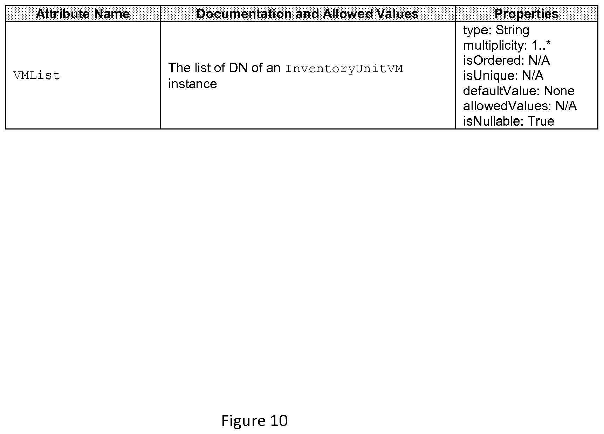

In another example, an attribute can be added indicating VMs that the VNF is running on, into the ManagedFunction (see, for example, 3GPP TS 28.632) IOC or concrete IOC (see, for example, 3GPP TS 28.708,) representing VNF such as MMEFunction. Figure 9 illustrates Table 2: Added attributes into the definition of VMUnits, according to certain embodiments. Similarly, Figure 10 illustrates Table 3: Definition of VMList, according to certain embodiments. Tables 1 through 3 are just some illustrative examples. Other implementations are possible and are permitted.

In certain embodiments, the InventoryUnitHw IOC (described at section 4.3.3 of 3GPP TS 28.632) can be reused to model the hardware in the NFV environment.

Furthermore, in certain embodiments, the VIM can model VM and HW, for instance into IntentoryUnitHw and the InventoryUnitVM and can send these models to VNFM. The VNFM can then forward these models to the EM. The EM can forward these models and the VNF model (for example, MMEFunction) created by the EM to the NM. The VIM can report/forward the alarms for VM and HW respectively, with the instance identifiers (for example, DN) of the models, to the VNFM/NFVO. The VNFM/NFVO can correlate the alarms based on the models.

Additionally, the VNFM can forward the alarms for VM and HW, with the instance identifiers (for example, DN) of the models, to the EM. The VNF can report the alarms for VNF layer only to the EM/VNFM and the EM/VNFM can correlate the alarms by the models. Alternatively, the EM/NFVO can forward the alarms for VNF, VM/HW respectively with the instance identifiers (for example, DN) of the models to the NM. The NM can then correlate the alarms based on the models.

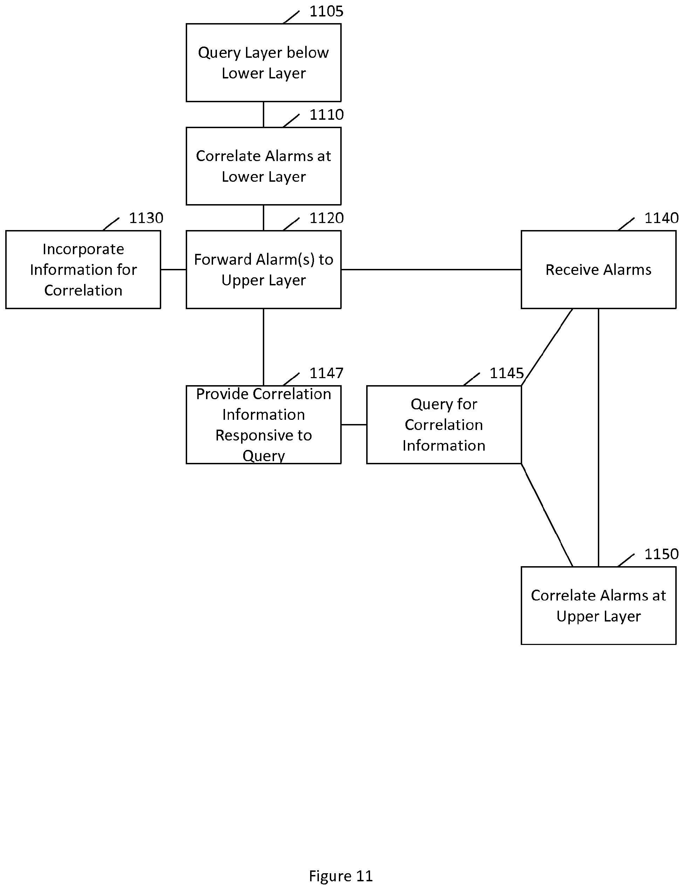

Figure 11 illustrates methods according to certain embodiments. As shown in Figure 11, a method can include, at 1110, correlating alarms within a lower layer of a network function virtualization environment. The method can also include, at 1120, forwarding at least one of the correlated alarms to an entity managing an upper layer of the network function virtualization environment for further correlation at the upper layer with upper layer alarms. In certain embodiments, only one of the correlated alarms may be forwarded.

In certain embodiments, the method can include, at 1130, including, at the lower layer, information relevant to the upper layer for correlation without the information being explicitly requested by the upper layer. Alternatively, in certain embodiments the method can include, at 1105, querying a layer below the lower layer for information used in the correlation at the lower layer. In certain cases, the information could be included without waiting for a request from the upper layer and could also be obtained by querying a layer below the lower layer.

A method can include, at 1140, receiving alarms that have been correlated for a lower layer of a network function virtualization environment. These may be the same alarms sent at 1120. The method can include, at 1150, correlating further the correlated alarms for an upper layer of the network function virtualization environment. The alarms can be received with information relevant to the upper layer for correlation without the information being explicitly requested by the upper layer.

Alternatively, the method can include, at 1145, querying the lower layer for information used in the correlation at the upper layer. The lower layer can, at 1147, provide the relevant information. This information can then be used at 1150 to further correlate the correlated alarms.

The methods illustrated in Figure 11 may include various methods according to the first and second alternatives discussed above. Various modifications and adjustments may be made to the illustrated method based on the discussion of the various alternatives described above.

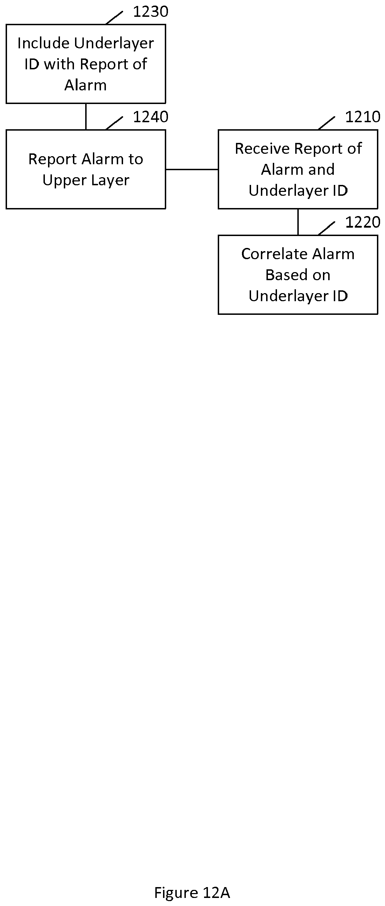

Figure 12A illustrates other methods according to certain embodiments. As shown in Figure 12A, a method can include, at 1210, receiving, in or separated from a report of an alarm, an identifier of underlayer resource supporting the upperlayer resource or functionality to be used for alarm correlation at a centralized entity. The method can also include, at 1220, correlating the alarm with at least one other alarm based on the underlayer identifier.

Similarly, a method can include, at 1230, including, in or separated from a report of an alarm, an identifier of underlayer resource supporting the upperlayer resource or functionality to be used for alarm correlation at a centralized entity. The method can also include, at 1240, reporting the alarm to an entity managing the higher layer for correlation with at least one other alarm based on the underlayer identifier. This can be the same report received at 1210.

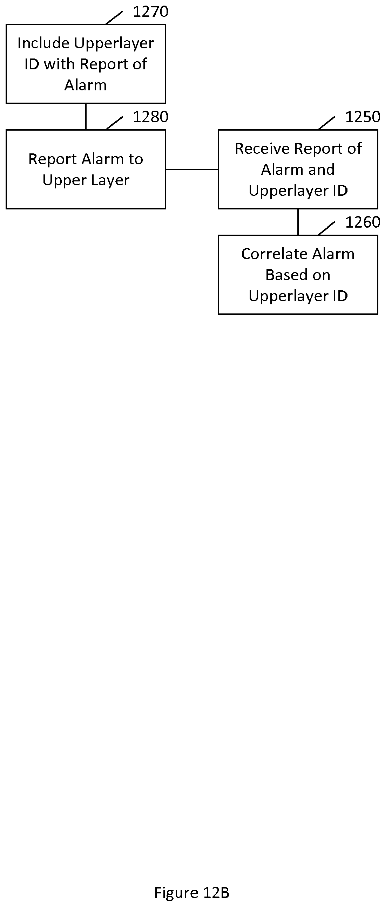

Figure 12B illustrates further methods according to certain embodiments. As shown in Figure 12B, a method can include, at 1250, receiving, in or separated from a report of an alarm, an identifier of upperlayer resource or functionality supported by the underlayer resource to be used for alarm correlation at a centralized entity. The method can also include, at 1260, correlating the alarm with at least one other alarm based on the upperlayer identifier.

Similarly, a method can include, at 1270, including, in or separated from a report of an alarm, an identifier of upperlayer resource or functionality supported by the underlayer resource to be used for alarm correlation at a centralized entity. The method can also include, at 1280, reporting the alarm to a higher layer for correlation with at least one other alarm based on the upperlayer identifier. This can be the same report received at 1250. As with the embodiments of Figure 12A, in the embodiments of Figure 12B, the upperlayer identifier can indicate an upperlayer virtual machine for virtualized network function.

The underlayer identifier can indicate an underlayer hardware. Moreover, the underlayer identifier can include a hardware identifier or virtual machine identifier, or both.

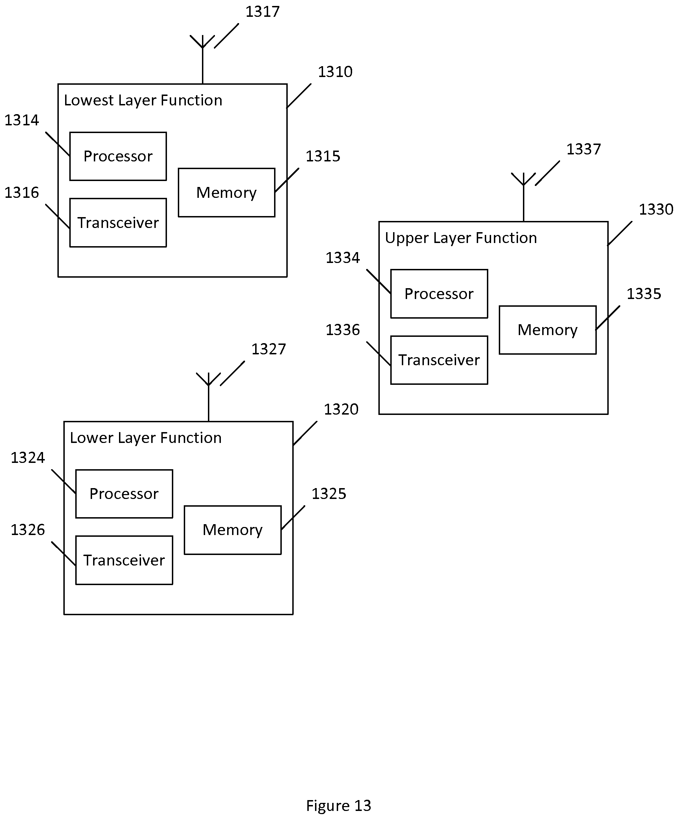

Figure 13 illustrates a system according to certain embodiments of the invention. In one embodiment, a system may include multiple devices, such as, for example, at least one lowest layer function 1310, at least one lower layer function 1320, and at least one upper layer function 1330. These various functions may be any of the functions or elements shown in the example architecture of Figure 1 or any of the other functions or elements shown or described in any of the other figures.

Each of these devices may include at least one processor, respectively indicated as 1314, 1324, and 1334. At least one memory can be provided in each device, and indicated as 1315, 1325, and 1335, respectively. The memory may include computer program instructions or computer code contained therein. The processors 1314, 1324, and 1334 and memories 1315, 1325, and 1335, or a subset thereof, can be configured to provide means corresponding to the various blocks of Figures 11, 12A, and 12B.

As shown in Figure 13, transceivers 1316, 1326, and 1336 can be provided, and each device may also include an antenna, respectively illustrated as 1317, 1327, and 1337. Other configurations of these devices, for example, may be provided. For example, upper layer function 1330 may be configured for wired communication, instead of or in addition to wireless communication, and in such a case antenna 1337 can illustrate any form of communication hardware, without requiring a conventional antenna. Indeed, it is not required that any of these devices have their own antenna. Furthermore, in certain embodiments, the various functions may be embodied in a single physical device, such as rack computing system, or a single computer.

Transceivers 1316, 1326, and 1336 can each, independently, be a transmitter, a receiver, or both a transmitter and a receiver, or a unit or device that is configured both for transmission and reception.

Processors 1314, 1324, and 1334 can be embodied by any computational or data processing device, such as a central processing unit (CPU), application specific integrated circuit (ASIC), or comparable device. The processors can be implemented as a single controller, or a plurality of controllers or processors.

Memories 1315, 1325, and 1335 can independently be any suitable storage device, such as a non-transitory computer-readable medium. A hard disk drive (HDD), random access memory (RAM), flash memory, or other suitable memory can be used. The memories can be combined on a single integrated circuit as the processor, or may be separate from the one or more processors. Furthermore, the computer program instructions stored in the memory and which may be processed by the processors can be any suitable form of computer program code, for example, a compiled or interpreted computer program written in any suitable programming language.

The memory and the computer program instructions can be configured, with the processor for the particular device, to cause a hardware apparatus such as lowest layer function 1310, lower layer function 1320, and upper layer function 1330, to perform any of the processes described herein (see, for example, Figures 11, 12A, and 12B). Therefore, in certain embodiments, a non-transitory computer-readable medium can be encoded with computer instructions that, when executed in hardware, perform a process such as one of the processes described herein. Alternatively, certain embodiments of the invention can be performed entirely in hardware.

Furthermore, although Figure 13 illustrates a system including a lowest layer function, lower layer function, and upper layer function, embodiments of the invention may be applicable to other configurations, and configurations involving additional elements or additional layers. For example, see the various layers shown in Figures 4-7.

One having ordinary skill in the art will readily understand that the invention as discussed above may be practiced with steps in a different order, and/or with hardware elements in configurations which are different than those which are disclosed. Therefore, although the invention has been described based upon these preferred embodiments, it would be apparent to those of skill in the art that certain modifications, variations, and alternative constructions would be apparent, while remaining within the scope of the invention. In order to determine the metes and bounds of the invention, therefore, reference should be made to the appended claims.

### List of Abbreviations

EM Element Management
FCAPS Fault, Configuration, Accounting, Performance and Security
NFV Network Functions Virtualization
NFV-MANO NFV Management and Orchestration
NFVONetwork Functions Virtualization Orchestrator
NM Network Management
OSS Operations Support System
VIM Virtualised Infrastructure Manager
VM Virtual Machine
VNF Virtualized Network Function
VNFM VNF Manager

## Claims

1. A method, comprising:
within a network function virtualization environment which comprises a plurality of layers, the layers representing a ranking order of lower and upper layers, respectively;
wherein a respective layer represents a lower layer, if the respective layer is forwarding towards a layer, which is an upper layer compared to the respective layer;
and wherein the respective layer represents an upper layer, if a layer, which is a lower layer compared to the respective layer, is forwarding towards the respective layer;
correlating alarms (1110) within a lower layer of the network function virtualization environment;
including (1130), at the lower layer, information relevant to an upper layer of the network function virtualization environment for further correlation without the information being explicitly requested by the upper layer; and
forwarding (1120) at least one of the correlated alarms and said information to an entity managing the upper layer for said further correlation (1150) with upper layer alarms.

2. A method, comprising:
within a network function virtualization environment which comprises a plurality of layers, the layers representing a ranking order of lower and upper layers, respectively;
wherein a respective layer represents an upper layer, if the respective layer is receiving from a layer, which is a lower layer compared to the respective layer;
and wherein the respective layer represents a lower layer, if a layer, which is an upper layer compared to the respective layer, is receiving from the respective layer;
receiving alarms (1140) that have been correlated for a lower layer (1110) of a network function virtualization environment;
wherein the alarms are received with information relevant to the upper layer for correlation without the information being explicitly requested by the upper layer; and
correlating further (1150) the correlated alarms for an upper layer of the network function virtualization environment.

3. A method, comprising:
within a network function virtualization environment which comprises a plurality of layers, the layers representing a ranking order of lower and upper layers, respectively;
wherein a respective layer represents a lower layer, if the respective layer is reporting towards a layer, which is an upper layer compared to the respective layer;
and wherein the respective layer represents an upper layer, if a layer, which is a lower layer compared to the respective layer, is reporting towards the respective layer;
including (1270), in a report of an alarm or separated therefrom, an identifier of upper layer resource or functionality, wherein the upper layer resource or functionality is a resource or functionality, which is supported by a lower layer resource, to be used for alarm correlation at a centralized entity; and
reporting an alarm (1280) to the upper layer for correlation (1260) with at least one other alarm based on the identifier.

4. The method of claim 3, wherein the identifier indicates an upper layer virtual machine for virtualized network function.

5. An apparatus, comprising:
at least one processor (1314; 1324; 1334); and
at least one memory (1315; 1325; 1335) including computer program code,
within a network function virtualization environment which comprises a plurality of layers, the layers representing a ranking order of lower and upper layers, respectively;
wherein a respective layer represents a lower layer, if the respective layer is forwarding towards a layer, which is an upper layer compared to the respective layer;
and wherein the respective layer represents an upper layer, if a layer, which is a lower layer compared to the respective layer, is forwarding towards the respective layer;
wherein the at least one memory (1315; 1325; 1335) and the computer program code are configured to, with the at least one processor (1314; 1324; 1334), cause the apparatus at least to correlate alarms within a lower layer of the network function virtualization environment;
wherein the at least one memory and the computer program code are configured to, with the at least one processor, cause the apparatus at least to include (1130), at the lower layer, information relevant to the upper layer for further correlation without the information being explicitly requested by the upper layer; and
forward (1120) at least one of the correlated alarms and said information to an entity managing an upper layer of the network function virtualization environment for said further correlation (1150) with upper layer alarms.

6. An apparatus, comprising:
at least one processor (1314; 1324; 1334); and
at least one memory (1315; 1325; 1335) including computer program code,
within a network function virtualization environment which comprises a plurality of layers, the layers representing a ranking order of lower and upper layers, respectively;
wherein a respective layer represents an upper layer, if the respective layer is receiving from a layer, which is a lower layer compared to the respective layer;
and wherein the respective layer represents a lower layer, if a layer, which is an upper layer compared to the respective layer, is receiving from the respective layer;
wherein the at least one memory (1315; 1325; 1335) and the computer program code are configured to, with the at least one processor (1314; 1324; 1334), cause the apparatus at least to receive alarms that have been correlated for a lower layer of a network function virtualization environment;
wherein the alarms are received (1140) with information relevant to the upper layer for correlation without the information being explicitly requested by the upper layer; and
correlate further the correlated alarms (1150) for an upper layer of the network function virtualization environment.

7. An apparatus, comprising:
at least one processor (1314; 1324; 1334); and
at least one memory (1315; 1325; 1335) including computer program code,
within a network function virtualization environment which comprises a plurality of layers, the layers representing a ranking order of lower and upper layers, respectively;
wherein a respective layer represents an upper layer, if the respective layer is receiving from a layer, which is a lower layer compared to the respective layer;
and wherein the respective layer represents a lower layer, if a layer, which is an upper layer compared to the respective layer, is receiving from the respective layer;
wherein the at least one memory (1315; 1325; 1335) and the computer program code are configured to, with the at least one processor (1314; 1324; 1334), cause the apparatus at least to receive (1250), in a report of an alarm or separated therefrom, an identifier of upper layer resource or functionality, wherein the upper layer resource or functionality is a resource or functionality, which is supported by an lower layer resource, to be used for alarm correlation at a centralized entity; and
correlate an alarm (1260) with at least one other alarm based on the identifier.

8. An apparatus, comprising:
at least one processor (1314; 1324; 1334); and
at least one memory (1315; 1325; 1335) including computer program code,
within a network function virtualization environment which comprises a plurality of layers, the layers representing a ranking order of lower and upper layers, respectively;
wherein a respective layer represents a lower layer, if the respective layer is reporting towards a layer, which is an upper layer compared to the respective layer;
and wherein the respective layer represents an upper layer, if a layer, which is a lower layer compared to the respective layer, is reporting towards the respective layer;
wherein the at least one memory (1315; 1325; 1335) and the computer program code are configured to, with the at least one processor (1314; 1324; 1334), cause the apparatus at least to include (1270), in a report of an alarm or separated therefrom, an identifier of upper layer resource or functionality, wherein the upper layer resource or functionality is a resource or functionality, which is supported by a lower layer resource, to be used for alarm correlation at a centralized entity; and
report an alarm (1280) to the upper layer for correlation (1260) with at least one other alarm based on the identifier.

9. The apparatus according to claim 8, wherein the identifier indicates an upper layer virtual machine for virtualized network function.

10. A computer program product encoding instructions for performing a process, which when executed by a computer causes the computer to perform all the steps of the method according to any of claims 1-4.

## Patentansprüche

1. Verfahren, umfassend:
in einer Netzwerkfunktionsvirtualisierungsumgebung, die mehrere Schichten umfasst, wobei die Schichten eine Rangordnung von unteren bzw. oberen Schichten repräsentieren;
wobei eine jeweilige Schicht eine untere Schicht repräsentiert, falls die jeweilige Schicht zu einer Schicht, die im Vergleich zu der jeweiligen Schicht eine obere Schicht ist, weiterleitet;
und wobei die jeweilige Schicht eine obere Schicht repräsentiert, falls eine Schicht, die im Vergleich zu der jeweiligen Schicht eine untere Schicht ist, zu der jeweiligen Schicht weiterleitet;
Korrelieren von Alarmen (1110) in einer unteren Schicht der Netzwerkfunktionsvirtualisierungsumgebung;
Einschließen (1130), bei der unteren Schicht, von Informationen entsprechend einer oberen Schicht der Netzwerkfunktionsvirtualisierungsumgebung zur weiteren Korrelation, ohne, dass die Informationen explizit durch die obere Schicht angefordert werden; und
Weiterleiten (1120) der korrelierten Alarme und/oder der Informationen zu einer Entität, die die obere Schicht verwaltet, zur weiteren Korrelation (1150) mit Alarmen der oberen Schicht.

2. Verfahren, umfassend:
in einer Netzwerkfunktionsvirtualisierungsumgebung, die mehrere Schichten umfasst, wobei die Schichten eine Rangordnung von unteren bzw. oberen Schichten repräsentieren;
wobei eine jeweilige Schicht eine obere Schicht repräsentiert, falls die jeweilige Schicht von einer Schicht, die im Vergleich zu der jeweiligen Schicht eine untere Schicht ist, empfängt;
und wobei die jeweilige Schicht eine untere Schicht repräsentiert, falls eine Schicht, die im Vergleich zu der jeweiligen Schicht eine obere Schicht ist, von der jeweiligen Schicht empfängt;
Empfangen von Alarmen (1140), die für eine untere Schicht einer Netzwerkfunktionsvirtualisierungsumgebung korreliert worden sind (1110);
wobei die Alarme mit Informationen entsprechend der oberen Schicht zur Korrelation empfangen werden, ohne, dass die Informationen explizit durch die obere Schicht angefordert werden; und
weiteres Korrelieren (1150) der korrelierten Alarme für eine obere Schicht der Netzwerkfunktionsvirtualisierungsumgebung.

3. Verfahren, umfassend:
in einer Netzwerkfunktionsvirtualisierungsumgebung, die mehrere Schichten umfasst, wobei die Schichten eine Rangordnung von unteren bzw. oberen Schichten repräsentieren;
wobei eine jeweilige Schicht eine untere Schicht repräsentiert, falls die jeweilige Schicht an eine Schicht, die im Vergleich zu der jeweiligen Schicht eine obere Schicht ist, meldet;
und wobei die jeweilige Schicht eine obere Schicht repräsentiert, falls eine Schicht, die im Vergleich zu der jeweiligen Schicht eine untere Schicht ist, an die jeweilige Schicht meldet;
Einschließen (1270), in einen Bericht eines Alarms oder getrennt davon, einer Kennung einer Ressource oder Funktionalität einer oberen Schicht, wobei die Ressource oder Funktionalität der oberen Schicht eine Ressource oder Funktionalität ist, die durch eine Ressource einer unteren Schicht unterstützt wird und zur Alarmkorrelation bei einer zentralisierten Entität zu verwenden ist; und
Melden eines Alarms (1280) an die obere Schicht zur Korrelation (1260) mit mindestens einem anderen Alarm basierend auf der Kennung.

4. Verfahren nach Anspruch 3, wobei die Kennung eine virtuelle Maschine der oberen Schicht für eine virtualisierte Netzwerkfunktion angibt.

5. Vorrichtung, umfassend:
mindestens einen Prozessor (1314; 1324; 1334); und mindestens einen Speicher (1315; 1325; 1335) einschließlich Computerprogrammcode,
in einer Netzwerkfunktionsvirtualisierungsumgebung, die mehrere Schichten umfasst, wobei die Schichten eine Rangordnung von unteren bzw. oberen Schichten repräsentieren;
wobei eine jeweilige Schicht eine untere Schicht repräsentiert, falls die jeweilige Schicht zu einer Schicht, die im Vergleich zu der jeweiligen Schicht eine obere Schicht ist, weiterleitet;
und wobei die jeweilige Schicht eine obere Schicht repräsentiert, falls eine Schicht, die im Vergleich zu der jeweiligen Schicht eine untere Schicht ist, zu der jeweiligen Schicht weiterleitet;
wobei der mindestens eine Speicher (1315; 1325; 1335) und der Computerprogrammcode mit dem mindestens einen Prozessor (1314; 1324; 1334) dazu ausgelegt sind, zu bewirken, dass die Vorrichtung zumindest Alarme in einer unteren Schicht der Netzwerkfunktionsvirtualisierungsumgebung korreliert;
wobei der mindestens eine Speicher und der Computerprogrammcode mit dem mindestens einen Prozessor dazu ausgelegt sind, zu bewirken, dass die Vorrichtung zumindest bei der unteren Schicht Informationen entsprechend der oberen Schicht zur weiteren Korrelation einschließt (1130), ohne, dass die Informationen explizit durch die obere Schicht angefordert werden; und
die korrelierten Alarme und/oder die Informationen zu einer Entität, die eine obere Schicht der Netzwerkfunktionsvirtualisierungsumgebung verwaltet, zur weiteren Korrelation (1150) mit Alarmen der oberen Schicht weiterleitet (1120).

6. Vorrichtung, umfassend:
mindestens einen Prozessor (1314; 1324; 1334); und
mindestens einen Speicher (1315; 1325; 1335) einschließlich Computerprogrammcode,
in einer Netzwerkfunktionsvirtualisierungsumgebung, die mehrere Schichten umfasst, wobei die Schichten eine Rangordnung von unteren bzw. oberen Schichten repräsentieren;
wobei eine jeweilige Schicht eine obere Schicht repräsentiert, falls die jeweilige Schicht von einer Schicht, die im Vergleich zu der jeweiligen Schicht eine untere Schicht ist, empfängt;
und wobei die jeweilige Schicht eine untere Schicht repräsentiert, falls eine Schicht, die im Vergleich zu der jeweiligen Schicht eine obere Schicht ist, von der jeweiligen Schicht empfängt;
wobei der mindestens eine Speicher (1315; 1325; 1335) und der Computerprogrammcode mit dem mindestens einen Prozessor (1314; 1324; 1334) dazu ausgelegt sind, zu bewirken, dass die Vorrichtung zumindest Alarme empfängt, die für eine untere Schicht einer Netzwerkfunktionsvirtualisierungsumgebung korreliert worden sind;
wobei die Alarme mit Informationen entsprechend der oberen Schicht zur Korrelation empfangen werden (1140), ohne, dass Informationen explizit durch die obere Schicht angefordert werden; und
die korrelierten Alarme für eine obere Schicht der Netzwerkfunktionsvirtualisierungsumgebung weiter korreliert (1150).

7. Vorrichtung, umfassend:
mindestens einen Prozessor (1314; 1324; 1334); und
mindestens einen Speicher (1315; 1325; 1335) einschließlich Computerprogrammcode,
in einer Netzwerkfunktionsvirtualisierungsumgebung, die mehrere Schichten umfasst, wobei die Schichten eine Rangordnung von unteren bzw. oberen Schichten repräsentieren;
wobei eine jeweilige Schicht eine obere Schicht repräsentiert, falls die jeweilige Schicht von einer Schicht, die im Vergleich zu der jeweiligen Schicht eine untere Schicht ist, empfängt;
und wobei die jeweilige Schicht eine untere Schicht repräsentiert, falls eine Schicht, die im Vergleich zu der jeweiligen Schicht eine obere Schicht ist, von der jeweiligen Schicht empfängt;
wobei der mindestens eine Speicher (1315; 1325; 1335) und der Computerprogrammcode mit dem mindestens einen Prozessor (1314; 1324; 1334) dazu ausgelegt sind, zu bewirken, dass die Vorrichtung zumindest in einem Bericht eines Alarms oder getrennt davon eine Kennung einer Ressource oder Funktionalität einer oberen Schicht empfängt (1250), wobei die Ressource oder Funktionalität der oberen Schicht eine Ressource oder Funktionalität ist, die durch eine Ressource einer unteren Schicht unterstützt wird und zur Alarmkorrelation bei einer zentralisierten Entität zu verwenden ist; und
einen Alarm mit mindestens einem anderen Alarm basierend auf der Kennung korreliert (1260).

8. Vorrichtung, umfassend:
mindestens einen Prozessor (1314; 1324; 1334); und
mindestens einen Speicher (1315; 1325; 1335) einschließlich Computerprogrammcode,
in einer Netzwerkfunktionsvirtualisierungsumgebung, die mehrere Schichten umfasst, wobei die Schichten eine Rangordnung von unteren bzw. oberen Schichten repräsentieren;
wobei eine jeweilige Schicht eine untere Schicht repräsentiert, falls die jeweilige Schicht an eine Schicht, die im Vergleich zu der jeweiligen Schicht eine obere Schicht ist, meldet;
und wobei die jeweilige Schicht eine obere Schicht repräsentiert, falls eine Schicht, die im Vergleich zu der jeweiligen Schicht eine untere Schicht ist, an die jeweilige Schicht meldet;
wobei der mindestens eine Speicher (1315; 1325; 1335) und der Computerprogrammcode mit dem mindestens einen Prozessor (1314; 1324; 1334) dazu ausgelegt sind, zu bewirken, dass die Vorrichtung zumindest in einem Bericht eines Alarms oder getrennt davon eine Kennung einer Ressource oder Funktionalität einer oberen Schicht einschließt (1270), wobei die Ressource oder Funktionalität der oberen Schicht eine Ressource oder Funktionalität ist, die durch eine Ressource einer unteren Schicht unterstützt wird und bei einer zentralisierten Entität zur Alarmkorrelation zu verwenden ist; und
der oberen Schicht einen Alarm zur Korrelation (1260) mit mindestens einem anderen Alarm basierend auf der Kennung meldet (1280).

9. Vorrichtung nach Anspruch 8, wobei die Kennung eine virtuelle Maschine der oberen Schicht für eine virtualisierte Netzwerkfunktion angibt.

10. Computerprogrammprodukt, das Anweisungen zum Durchführen eines Prozesses codiert, die bei Ausführung durch einen Computer bewirken, dass der Computer alle Schritte des Verfahrens nach einem der Ansprüche 1-4 durchführt.

## Revendications

1. Procédé comprenant :
dans un environnement de virtualisation de fonction de réseau qui comprend une pluralité de couches, les couches représentant un ordre de classement de couches inférieure et supérieure, respectivement ;
dans lequel une couche respective représente une couche inférieure si la couche respective transmet vers une couche, qui est une couche supérieure comparée à la couche respective ;
et dans lequel la couche respective représente une couche supérieure si une couche, qui est une couche inférieure comparée à la couche respective, transmet vers la couche respective ;
la corrélation d'alarmes (1110) à l'intérieur d'une couche inférieure de l'environnement de virtualisation de fonction de réseau ;
l'inclusion (1130), au niveau de la couche inférieure, d'informations se rapportant à une couche supérieure de l'environnement de virtualisation de fonction de réseau pour une corrélation supplémentaire sans que les informations ne soient explicitement demandées par la couche supérieure ; et
la transmission (1120) d'au moins l'une des alarmes corrélées et desdites informations à une entité gérant la couche supérieure pour ladite corrélation supplémentaire (1150) avec des alarmes de couche supérieure.

2. Procédé comprenant :
dans un environnement de virtualisation de fonction de réseau qui comprend une pluralité de couches, les couches représentant un ordre de classement de couches inférieure et supérieure, respectivement ;
dans lequel une couche respective représente une couche supérieure si la couche respective reçoit d'une couche, qui est une couche inférieure comparée à la couche respective ;
et dans lequel la couche respective représente une couche inférieure si une couche, qui est une couche supérieure comparée à la couche respective, reçoit de la couche respective ;
la réception d'alarmes (1140) qui ont été corrélées pour une couche inférieure (1110) d'un environnement de virtualisation de fonction de réseau ;
dans lequel les alarmes sont reçues avec des informations se rapportant à la couche supérieure pour une corrélation sans que les informations ne soient explicitement demandées par la couche supérieure ; et
une corrélation supplémentaire (1150) des alarmes corrélées pour une couche supérieure de l'environnement de virtualisation de fonction de réseau.

3. Procédé comprenant :
dans un environnement de virtualisation de fonction de réseau qui comprend une pluralité de couches, les couches représentant un ordre de classement de couches inférieure et supérieure, respectivement ;
dans lequel une couche respective représente une couche inférieure si la couche respective rend compte vers une couche, qui est une couche supérieure comparée à la couche respective ;
et dans lequel la couche respective représente une couche supérieure si une couche, qui est une couche inférieure comparée à la couche respective, rend compte vers la couche respective ;
l'inclusion (1270), dans une annonce d'une alarme ou de manière séparée de cette dernière, d'un identifiant d'une ressource ou d'une fonctionnalité de couche supérieure, dans lequel la ressource ou la fonctionnalité de couche supérieure est une ressource ou une fonctionnalité, qui est prise en charge par une ressource de couche inférieure, à utiliser pour une corrélation d'alarme au niveau d'une entité centralisée ; et
l'annonce d'une alarme (1280) à la couche supérieure pour une corrélation (1260) avec au moins une autre alarme en se basant sur l'identifiant.

4. Procédé selon la revendication 3, dans lequel l'identifiant indique une machine virtuelle de couche supérieure pour une fonction de réseau virtualisé.

5. Appareil comprenant :
au moins un processeur (1314 ; 1324 ; 1334) ; et
au moins une mémoire (1315 ; 1325 ; 1335) comprenant un code de programme d'ordinateur,
dans un environnement de virtualisation de fonction de réseau qui comprend une pluralité de couches, les couches représentant un ordre de classement de couches inférieure et supérieure, respectivement ;
dans lequel une couche respective représente une couche inférieure si la couche respective transmet vers une couche, qui est une couche supérieure comparée à la couche respective ;
et dans lequel la couche respective représente une couche supérieure si une couche, qui est une couche inférieure comparée à la couche respective, transmet vers la couche respective ;
dans lequel la ou les mémoires (1315 ; 1325 ; 1335) et le code de programme d'ordinateur sont configurés, avec le ou les processeurs (1314 ; 1324 ; 1334), pour contraindre l'appareil au moins à corréler des alarmes à l'intérieur d'une couche inférieure de l'environnement de virtualisation de fonction de réseau ;
dans lequel la ou les mémoires et le code de programme d'ordinateur sont configurés, avec le ou les processeurs, pour contraindre l'appareil au moins à inclure (1130), au niveau de la couche inférieure, des informations se rapportant à la couche supérieure pour une corrélation supplémentaire sans que les informations ne soient explicitement demandées par la couche supérieure ; et
pour transmettre (1120) au moins l'une des alarmes corrélées et lesdites informations à une entité gérant une couche supérieure de l'environnement de virtualisation de fonction de réseau pour ladite corrélation supplémentaire (1150) avec des alarmes de couche supérieure.

6. Appareil comprenant :
au moins un processeur (1314 ; 1324 ; 1334) ; et
au moins une mémoire (1315 ; 1325 ; 1335) comprenant un code de programme d'ordinateur,
dans un environnement de virtualisation de fonction de réseau qui comprend une pluralité de couches, les couches représentant un ordre de classement de couches inférieure et supérieure, respectivement ;
dans lequel une couche respective représente une couche supérieure si la couche respective reçoit d'une couche, qui est une couche inférieure comparée à la couche respective ;
et dans lequel la couche respective représente une couche inférieure si une couche, qui est une couche supérieure comparée à la couche respective, reçoit de la couche respective ;
dans lequel la ou les mémoires (1315 ; 1325 ; 1335) et le code de programme d'ordinateur sont configurés, avec le ou les processeurs (1314 ; 1324 ; 1334), pour contraindre l'appareil au moins à recevoir des alarmes qui ont été corrélées pour une couche inférieure d'un environnement de virtualisation de fonction de réseau ;
dans lequel les alarmes sont reçues (1140) avec des informations se rapportant à la couche supérieure pour une corrélation sans que les informations ne soient explicitement demandées par la couche supérieure ; et
à corréler davantage les alarmes corrélées (1150) pour une couche supérieure de l'environnement de virtualisation de fonction de réseau.

7. Appareil comprenant :
au moins un processeur (1314 ; 1324 ; 1334) ; et
au moins une mémoire (1315 ; 1325 ; 1335) comprenant un code de programme d'ordinateur,
dans un environnement de virtualisation de fonction de réseau qui comprend une pluralité de couches, les couches représentant un ordre de classement de couches inférieure et supérieure, respectivement ;
dans lequel une couche respective représente une couche supérieure si la couche respective reçoit d'une couche, qui est une couche inférieure comparée à la couche respective ;
et dans lequel la couche respective représente une couche inférieure si une couche, qui est une couche supérieure comparée à la couche respective, reçoit de la couche respective ;
dans lequel la ou les mémoires (1315 ; 1325 ; 1335) et le code de programme d'ordinateur sont configurés, avec le ou les processeurs (1314 ; 1324 ; 1334), pour contraindre l'appareil au moins à recevoir (1250), dans une annonce d'une alarme ou de manière séparée de cette dernière, un identifiant d'une ressource ou d'une fonctionnalité de couche supérieure, dans lequel la ressource ou la fonctionnalité de couche supérieure est une ressource ou une fonctionnalité, qui est prise en charge par une ressource de couche inférieure, à utiliser pour une corrélation d'alarme au niveau d'une entité centralisée ; et
à corréler une alarme (1260) avec au moins une autre alarme en se basant sur l'identifiant.

8. Appareil comprenant :
au moins un processeur (1314 ; 1324 ; 1334) ; et
au moins une mémoire (1315 ; 1325 ; 1335) comprenant un code de programme d'ordinateur,
dans un environnement de virtualisation de fonction de réseau qui comprend une pluralité de couches, les couches représentant un ordre de classement de couches inférieure et supérieure, respectivement ;
dans lequel une couche respective représente une couche inférieure si la couche respective rend compte vers une couche, qui est une couche supérieure comparée à la couche respective ;
et dans lequel la couche respective représente une couche supérieure si une couche, qui est une couche inférieure comparée à la couche respective, rend compte vers la couche respective ;
dans lequel la ou les mémoires (1315 ; 1325 ; 1335) et le code de programme d'ordinateur sont configurés, avec le ou les processeurs (1314 ; 1324 ; 1334), pour contraindre l'appareil au moins à inclure (1270), dans une annonce d'une alarme ou de manière séparée de cette dernière, un identifiant d'une ressource ou d'une fonctionnalité de couche supérieure, dans lequel la ressource ou la fonctionnalité de couche supérieure est une ressource ou une fonctionnalité, qui est prise en charge par une ressource de couche inférieure, à utiliser pour une corrélation d'alarme au niveau d'une entité centralisée ; et
à annoncer une alarme (1280) à la couche supérieure pour une corrélation (1260) avec au moins une autre alarme en se basant sur l'identifiant.

9. Appareil selon la revendication 8, dans lequel l'identifiant indique une machine virtuelle de couche supérieure pour une fonction de réseau virtualisé.

10. Produit-programme d'ordinateur codant des instructions pour réaliser un processus qui, lorsqu'il est exécuté par un ordinateur, contraint l'ordinateur à réaliser toutes les étapes du procédé selon l'une quelconque des revendications 1 à 4.
